# EUROPÄISCHE PATENTSCHRIFT

(11) **EP 1 076 037 B1**
(45) Veröffentlichungstag und Bekanntmachung des Hinweises auf die Patenterteilung: **29.12.2004**
(21) Anmeldenummer: 99122725.7
(22) Anmeldetag: 16.11.1999
(51) Int. Cl.: C02F 1/00, C02F 1/48

(54) **Trinkwasser-Durchströmungsgerät für Wasserleitungen**
Potable water flow through device for water conduits
Dispositif d'écoulement pour l'eau potable dans dans des conduites d'eau

(30) Priorität: 09.08.1999 EP 99115666
(43) Veröffentlichungstag der Anmeldung: 14.02.2001
(73) Patentinhaber: Lindtner, Monika, 59510 Lippetal (DE)
(72) Erfinder: Gross, Peter, 59510 Lippetal (DE)
(74) Vertreter: Klocke, Peter, Dipl.-Ing.

(56) Entgegenhaltungen:
- EP-A- 0 776 694
- DE-A- 3 303 015
- DE-A- 4 029 860
- DE-U- 29 714 201
- DE-U- 29 805 105

## Beschreibung

Die vorliegende Erfindung betrifft ein Trinkwasser-Durchströmungsgerät für Wasserleitungen gemäß dem Oberbegriff des Anspruchs 1.

Ein derartiges Gerät ist aus der DE 29805105.2 bekannt. Dieses Gerät weist neben den üblichen Anschlußmitteln eine Verbindungsleitung in Form einer Möbiusschleife auf, bei der sich der Wasserzulauf in einen rechten und einen gegenüberliegenden linken Leitungsstrang aufteilt und die beiden Leitungsstränge U-förmig zu dem neben dem Wasserzulauf angeordneten Wasserauslauf geführt sind, wobei der rechte Leitungsstrang von links und der linke Leitungsstrang von rechts in den Wasserauslauf mündet. Dadurch sind immer Leitungsstränge mit gegenläufigem Vasser nebeneinander angeordnet.

Bei der bekannten Anordnung werden die aufgrund der Vorgeschichte des Leitungswassers gebildeten Clusterstrukturen durch verschiedene Maßnahmen verändert, um sowohl das Verhalten des Wassers als auch die Wirkungen beim Menschen sowohl innerlich als auch äußerlich positiv zu beeinflussen. Hierzu sind in der bekannten Anordnung verschiedene Verwirblungseinrichtungen sowie Bereiche zur Änderung der Clusterstruktur mittels Magnetfelder vorgesehen. Des weiteren sind zwischen den Bereichen, in denen das Wasser dem Magnetfeld eines Magneten ausgesetzt wird, druckverändernde Einrichtungen vorgesehen. Zwischen der Kupferrohrkonstruktion und dem Gehäuse ist Baumwolle und eine Kupferfolie angeordnet. Der verbleibende Hohlraum in dem Gehäuse ist mit einem piezoelektrisch ausgerichtetem Quarzsand ausgefüllt.

Mit einem derart ausgestaltetem Gerät wurden bereits enorme strukturelle Veränderungen des Wassers erreicht. Der vorliegenden Erfindung liegt nun die Aufgabe zugrunde, weitere Möglichkeiten vorzuschlagen, mit denen die zu erzielenden Wirkungen bei einem Trinkwasser-Durchströmungsgerät der eingangs charakterisierten Art noch weiter verbessert werden kann.

Diese Aufgabe wird erfindungsgemäß mit den Merkmalen des Anspruchs 1 gelöst. Weitere vorteilhafte Ausgestaltungen sind den Unteransprüchen zu entnehmen.

Es wurde festgestellt, daß die gesundheitlich wirkenden Veränderungen des Wassers ohne magnetische Beeinflussung bereits erzielt werden können. Ein Verbesserung gegenüber der bekannten Ausführung wurde gemäß der Erfindung dadurch erreicht, daß die Kupferrohrkonstruktion mit zwei Kunststofffolien, zwischen denen eine Schicht aus achsgerichtetem Magmamehl angeordnet ist, umhüllt ist. Überraschenderweise wurde festgestellt, dass diese zusätzliche Schicht aus Magma, bei dem die submolekularen Teile zuvor in einer Richtung ausgerichtet Wurden, serlbst keine Information auf da-s-Wass-er-gibt-und--dari3berhinaus als Abschirmung für von außen kommende künstliche elektromagnetische Strahlung dient. Die Herstellung und die physikalischen Grundlagen bei achsgerichteten Materialien basieren auf Erkenntnissen der neueren Physik und Medizin und sind in der Fachliteratur, beispielsweise des VESTA-Verlages, in A-9220 Velden/Wörther See, Karl-Krobath-Weg 20, Österreich offenbart (siehe auch: Das Phänomen LEBEN, von H.J. Lamers, L.W.Göring, P.G.Seeger, VESTAVerlag 1992, ISBN 90-5506-001-1).

Zwischen der äußeren Kunststofffolie und dem Gehäuse befinden sich abwechselnd mehrere Lagen achsgerichteter Kupferfolie und Baumwolle, wodurch ein Orgon-Akkumulator nach den Prinzipien von Wilhelm Reich realisiert wird. Als letzte Lage ist eine weitere Kupferfolie angeordnet, die dann mit einer Schicht aus achsgerichtetem und piezoelektrisch ausgerichtetem Quarzsand umgeben ist. Durch die Anordnung aus einem achsgerichteten Kunststoffrohr, dem anschließenden Quarzsand, der Kupferfolie und den anschließenden abwechselnden Lagen Baumwolle/Kupferfolie werden von außen kommend abwechselnd Schichten aus organischem und anorganischem Material gebildet, die dazu dienen, in der Natur vorkommende Energiefelder einzufangen und auf die Wasserleitung zu konzentrieren. Zusätzlich können die Kupferfolie, das Kunststoffrohr und der Quarzsand mit einer Vielzahl von Naturfrequenzen behandelt werden, um diese Informationen den verwendeten Materialien durch Aufprägen entsprechender Schwingungsmuster mitzugeben.

Zwischen dem Wassereinlauf und der U-Krümmung bzw. zwischen den Magneten der die Clusterstruktur verändernden Bereichen können, wie beim Stand der Technik bereits angegeben, mehrere in Abständen angeordnete Querschnittsverengungen vorgesehen sein. Diese Querschnittsverengungen, die eine möglichst plötzliche Veränderung der Durchflussgeschwindigkeit bewirken, reduzieren die Oberflächenspannung des Wassers. Bei größeren Querschnitten (> 1 ") können an dieser Stelle Wirbelkammern vorgesehen sein. Gemäß einer bevorzugten Ausfülrungsform werden bei Trinkwasser-Durchströmungsgeräten mit einem größeren Querschnitt (> 1 ") Wirbelkammern als druckverändemde Einrichtungen vorgesehen, die für eine sprunghafte Änderung der Fließgeschwindigkeit sorgen. Zusätzlich sind in den Wirbelkammern propellerartige Verwirbelungselemente angeordnet, die abwechselnd das Wasser in einen Rechts/Links-Drall versetzen. Diese Verwirbelungseinrichtungen sind so wirksam, dass bei größeren Geräten die vor den die Clusterstruktur verändernden Bereichen angeordneten Verwirbelungseinrichtungen gemäß dem Stand der Technik weggelassen werden können. Es können je nach Ausgestaltung mehrere Wirbelkammern hintereinander oder in einer Wirbelkammer mehrer Verwirbelungselemente hintereinander angeordnet sein.

Überraschenderweise wurde festgestellt, dass eine bessere Wirkung auf die physikalischen Eigenschaften (Kalkablagerungen) erzielt werden kann, wenn die beiden Magnete in den die Clusterstruktur verändernden Bereichen mit dem magnetischen Nordpol auf die beiden Einlaufrohre und mit dem magnetischen Südpol auf die beiden Auslaufrohre gerichtet sind, so dass das in den Rohren fließende Wasser zuerst zweimal der magnetischen Nordstrahlung und dann zweimal der magnetischen Südstrahlung ausgesetzt ist. Mit einem Polaritätsprüfer konnte festgestellt werden, dass auf der Strecke zwischen den beiden Bereichen die Polarität wechselt, so dass im Anschluß an die Nordstrahlung des Magneten sich ein magnetischer Bereich mit Südstrahlung bildet, bevor die Rohre wieder gezielt der magnetischen Nordstrahlung ausgesetzt werden. Nach der U-Krümmung ist es umgekehrt.

Mit einem derartigen Trinkwasser-Durchströmungsgerät konnten biophysikalische Meßwerte für das Wasser von mindestens 25 000 Bovis-Einheiten gemessen werden. Bei diesen Bovis-Einheiten handelt es sich um eine von dem französischen Physiker Alfred Bovis geschaffene Skala, der die aus der Physik bekannten Wellenlängen von elektromagnetischen Wellen zugrunde gelegt wurde. Es handelt sich hierbei um Wirkungseinheiten auf ein biologisches System. Durch diese hohen Bovis-Einheiten wird zum Ausdruck gebracht, dass die Wirkungen des Wassers auf den Menschen und die Natur enorm sind. Durch den Einsatz einer Vielzahl verschiedener Wirkprinzipien, wie Verwirbelung, physikalische Bakterienabtötung, Veränderung der Oberflächenspannung, Anreicherung des Wassers mit Sauerstoff verhält sich das aus dem Trinkwasser-Durchströmungsgerät austretende Wasser völlig anders als herkömmliches Wasser. So wurde beispielsweise festgestellt, dass das Wasser erheblich dünnflüssiger und damit lösungsstärker ist als das übliche Leitungswasser. Es hat eine deutlich geringere Viskosität. Der Kalk erhält eine andere Konsistenz, so dass damit andere Zusatzgeräte oder Mittel, die das Verkalken verhindern sollen, entfallen können. Der in Gestalt von Schwebepartikeln im Trinkwasser vorhandene Kalk lagert sich nicht mehr in Form der üblichen Kalkkristalle an, sondern er kristallisiert in Kugelform. Dadurch sind die bisherigen Kalkablagerungen in Kesseln, Töpfen, Wasserkochern und Kaffeemaschinen sowie den Frisch- und Abwasserrohren stark vermindert bis nicht mehr vorhanden. Durch den Einsatz des Trinkwasser-Durchströmungsgerätes wird das Wasser erheblich weicher, so dass zum Waschen weniger Waschmittel benötigt wird. Gegenüber normalem Leitungswasser ist die Oberflächenspannung verringert, so dass das behandelte Wasser eine entschieden höhere Benetzungsfähigkeit aufweist. Teilweise kann der gleiche Reinigungseffekt mit kaltem Wasser erreicht werden, wozu vorher warmes Wasser benötigt wurde. Der pH-Wert des Leitungswassers tendiert deutlich gegen neutral und die elektrische Leitfähigkeit ist deutlich geringer. Des weiteren enthält das Wasser durchschnittlich 6 bis 7 % mehr Sauerstoff als das entsprechende Leitungswasser. Zusätzlich ist das Wärmeleit- und Wärmehaltevermögen erhöht.

Bei Versuchen konnte außerdem nachgewiesen werden, dass das Zusammenspiel all der vorstehend genannten Parameter bewirkt, dass das solchermaßen in seiner Struktur veränderte Wasser abgelagerte Schad- und Schlackenstoffe aus Schwermetallen und chemisch organischen Verbindungen nicht nur aus dem Blut- und Weichgewebe, sondern auch aus dem Knochen- und Nervengewebe herauszulösen vermag. Dies wurde durch entsprechende Urinanalysen nachgewiesen.

Nachfolgend wird die Erfindung mittels Ausführungsbeispielen in Verbindung mit den begleitenden Zeichnungen näher erläutert. Es stellen dar:
- Fig.1: die Rohrkonstruktion eines Trinkwasser-Durchströmungsgerätes für Anschlüsse unterhalb von 1" mit zusätzlichen Magneten,
- Fig.2: einen Querschnitt durch das Gehäuse und die Rohrkonstruktion,
- Fig.3: die Ansicht einer Verwirbelungskammer und das Verwirbelungselement in 3D-Darstellung,
- Fig.4: zwei weitere verschiedene Ausführungsformen von Verwirbelungselementen für Verwirbelungskammern gemäß Figur 3 und
- Fig.5: eine Veranschaulichung der elektromagnetischen Verwirbelung aufgrund der Fließbewegung des Wassers in den Kupferrohren.

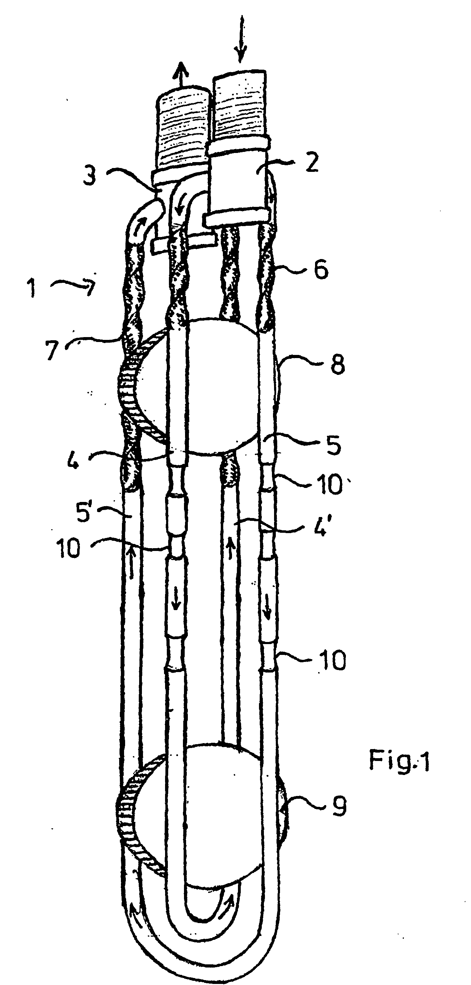

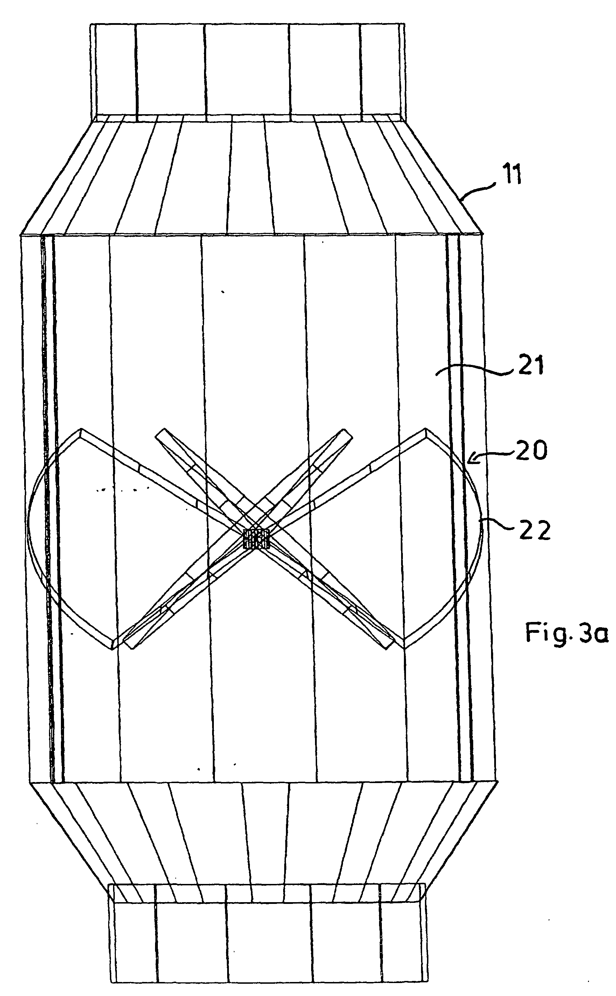

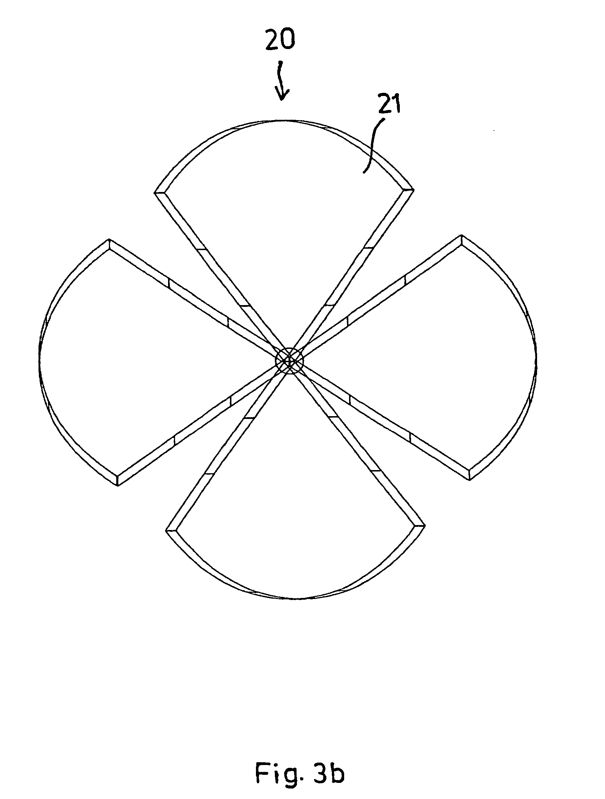

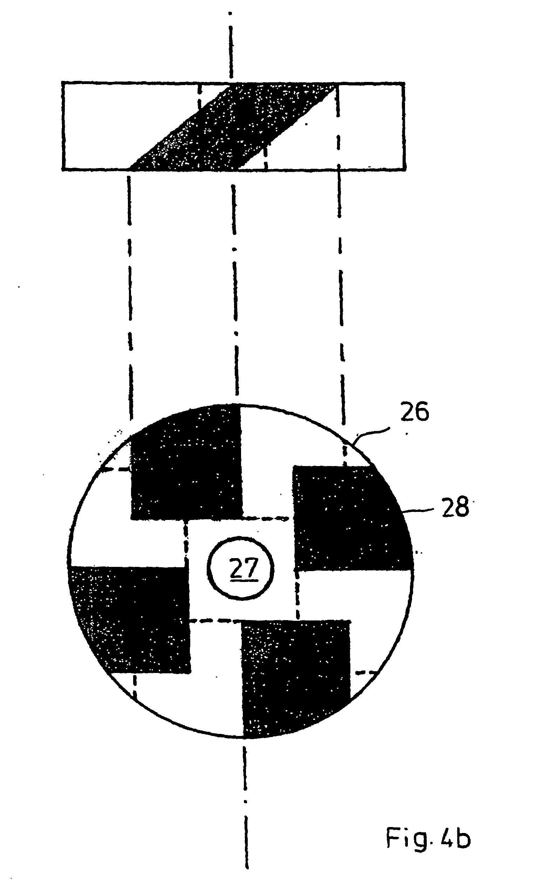

Fig.1 zeigt die Rohrkonstruktion 1 für ein Trinkwasser-Durchströmungsgerät bis zu einem Anschlussdurchmesser von 1". Die Rohrkonstruktion 1 umfasst einen Wasserzulaufanschluss 2 und einen Wasserauslaufanschluss 3, die über die Verbindungsleitungen 4 und 5 in der Art miteinander verbunden sind, dass der am Wasserzulaufanschluss 2 links abgehende Leitungsstrang 4 am Wasserauslaufanschluss 3 rechts ankommt und umgekehrt und die Leitungen Uförmig gebogen sind. Nach dem Wasserzulaufanschluß 2 und vor dem Wasserauslaufanschluß 3 sind die als Kupferrohre ausgebildeten Leitungsstränge 4, 5 und 4', 5' als Wendelrohr 6 bzw. 7 geformt. Zwischen den Leitungssträngen 4, 5 und 4', 5' befinden sich im oberen Bereich ein Magnet 8 und in der Nähe der U-Krümmung ein Magnet 9, die mit der Nordseite auf das von dem Wasserzulaufanschluss 2 in Richtung U-Krümmung strömende Wasser und mit der Südseite auf das von der U-Krümmung zum Wasserauslaufanschluss 3 fließende Wasser gerichtet sind. Zwischen den beiden Magnenten 8, 9 befinden sich bei dieser Ausführungsform in unterschiedlichen Abständen Querschnittsverengungen 10 in den beiden Leitungssträngen 4 und 5, die von dem Wasserzulaufanschluß 2 zu der U-Krümmung verlaufen. Bei größeren Geräten werden anstelle der Querschnittsverengungen die in der Fig. 3 dargestellten Verwirbelungskammern 11 verwendete. In einer Ausführungsform wurden hierzu fünf aufeinanderfolgende Verwirbelungskammern in jedem Leitungsstrang 4, 5 mit abwechselnder Drehrichtung verwendet. Bei diesen größeren Geräten sind aufgrund der Verwirbelung in den Verwirbelungskammern 11 die Wendelrohre 6 bzw. 7 nicht erforderlich. Weitere Ausbildungen der dazu verwendeten Verwirbelungselemente sind in den Figuren 4a und 4b dargestellt und unten erläutert.

Die Polarität zwischen den Magneten 8 und 9 in den Bereichen zwischen den Magneten 8 und 9 ist an den Verbindungsleitungen 4, 5 und 4', 5' entgegengesetzt zu der Polarität direkt an den Magneten. D.h. auf dem Weg zum Magneten 8 zum Magneten 9 wird das Wasser zuerst einer Nordpolarität im Bereich des Magneten 8, im Zwischenraum einer Südpolarität und anschließend wieder einer Nordpolarität im Bereich des Magneten 9 ausgesetzt. Auf dem Weg vom Magneten 9 zum Magneten 8 nach der U-Krümmung verhält es sich umgekehrt.

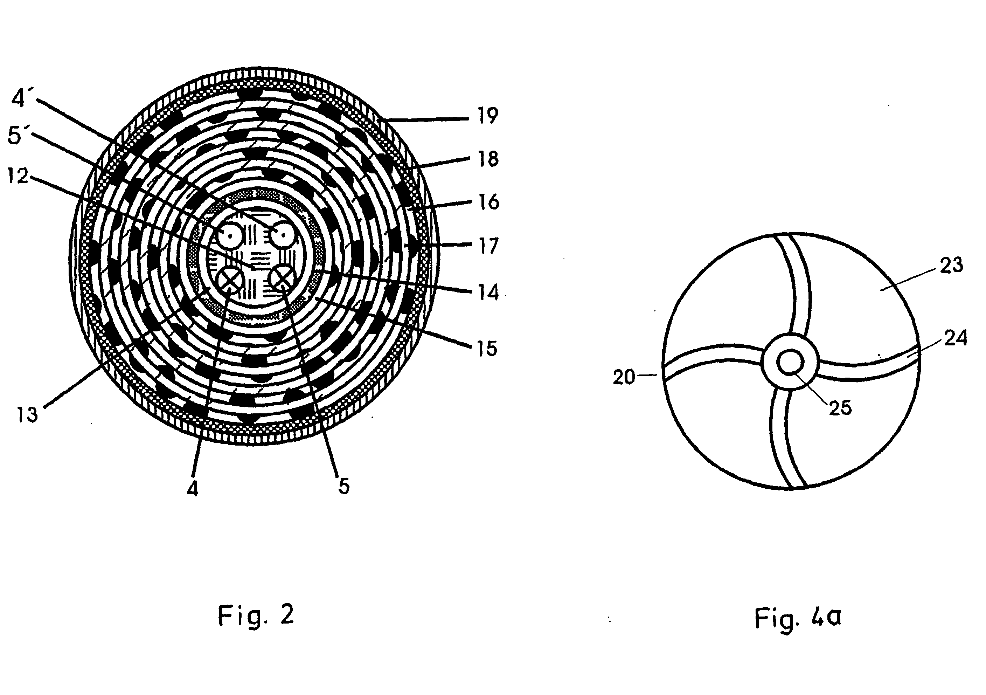

Fig. 2 zeigt in schematischer Ansicht den Querschnitt durch das Trinkwasser-Durchströmungsgerät, beispielsweise im Bereich zwischen den Magneten 8, 9. Die Verbindungsleitungen 4 und 5, die vom Wasserzulaufanschluss 2 kommen sind mit einem Kreuz und die zu dem Wasserauslaufanschluss 3 führenden Verbindungsleitungen 4' und 5' mit einem Punkt gekennzeichnet. Um diese Kupferleitungen ist eine erste Kunststofffolie 13, auf der sich eine Magmaschicht 14 befindet, angeordnet. Diese wird mittels einer zweiten Kunststofffolie 15 gehalten. Daran schließen sich vier Lagen aus Kupferfolie 16 und Baumwollwatte 17 an. Auf die äußerste Baumwolllage 17 folgt noch eine weitere Kupferfolie 16. Zwischen dieser Kupferfolie 16 und dem Gehäuse 19 aus PVC befindet sich eine Lage 18 aus achsgerichtetem und piezoelektrisch ausgerichteten Quarzkristallen. Der Innenraum zwischen den Kupferrohren 4, 5, 4' und 5' ist ebenfalls mit achsgerichteten Quarzkristallen 12 ausgefüllt, die jedoch nicht piezoelektrisch ausgerichtet sein dürfen. Die Quarzkristalle 12 bzw. 18 weisen unterschiedliche Korngrößen auf. Sowohl die Kupferfolie 16 als auch das Gehäuse 19 und die Quarzkristalle 12, 18 sind zusätzlich mit einer Vielzahl verschiedener Naturfrequenzen behandelt, um diese Information an das Wasser zu übertragen. Die Übertragung erfolgt mit dem bekannten Prinzip nach Wilhelm Reich infolge der schichtweisen Anordnung von organischen und anorganischen Materialien, die in der Natur vorkommende Energien akkumulieren und mit der entsprechenden Information auf das Wasser aufbringen.

Fig. 3 zeigt eine Wirbelkammer 11 für Anschlussquerschnitte ab 1" mit einem im Inneren fest installierten Verwirbelungselement 20. Die Verwirbelungskammern 11 weisen einen gegenüber dem Rohrquerschnitt vergrößerten Innenraum 21 auf. Der Übergang der Durchmesser des Innenraums 21 auf den Rohrdurchmesser erfolgt mittels eines nicht dargestellten Absatzes, d.h. nicht kontinuierlich bzw. konisch, wie in der Figur am Außenumfang dargestellt, sodern abrupt. Das in jeder Kammer angeordnete Verwirbelungselement 20 weist in dieser Ausführungsform vier Kreissegmente 22 auf, wobei die gegenüberliegenden Segmente gegeneinander jeweils um 90° verdreht sind. Die Anordnung der einzelnen Segmente ist derart, dass dem Wasser eine eindeutige Drallrichtung gegeben wird. Wie bereits erwähnt befinden sich vier aufeinanderfolgende Wirbelkammern 11 in dem Trinkwasser-Durchströmungsgerät, wobei die Drallrichtung von Wirbelkammer zu Wirbelkammer wechselt. In Durchlaufrichtung wird das Wasser zuerst rechts gedreht.

Fig. 4a zeigt eine schematische Anordnung einer anderen Ausgestaltung eines Verwirbelungselementes 20 bestehend aus einer Scheibe 23 mit drallerzeugenden Öffnungen 24. Im Zentrum der Scheibe befindet sich eine zusätzliche Bohrung 25, durch die ebenfalls das Wasser strömen kann. Dadurch wird der Wirbelungseffekt noch einmal erhöht.

In Fig. 4b ist eine andere Ausführungsform eines Verwirbelungselements 26 in Grundriß und Aufriß dargestellt. Dieses Verwirbelungselement 26 weist eine zentrale Bohrung 27 mit Gewinde sowie ausgefräste Ausnehmungen 28, die durch das Verwirbelungselement hindurchführen, wie durch die gestrichelten Linien angedeutet. Das in der Figur gezeigte Verwirbelungselement 26 ist ein Rechtsdrall erzeugendes Verwirbelungselement, beispielsweise aus Rotguß-Vollmaterial. Ein Linksdrall erzeugendes Verwirbelungselement ist entsprechend umgekehrt ausgebildet. In einer Wirbelkammer 11, wie in Figur 3a dargestellt, befinden sich nacheinander auf einer in die Bohrung 27 eingeschraubten, nicht dargestellten Gewindestange, jeweils ungefähr in dreifachen Abstand der Dicke des Verwirbelungselements 26 insgesamt fünf derartiger Elemente, die bis an die Wandung der Wirbelkammer reichen und abwechselnd Rechtsdrall-Linksdrall-Rechtsdrall-Linksdrall-Rechtsdrall erzeugen. Die einzelnen Elemente 26 sind feststehend. Die zugehörige Wirbelkammer 11 ist im Vergleich zu einer Wirbelkammer mit nur einem Verwirbelungselement wie in Figur 3b oder 4a länger ausgebildet und ersetzt eine Anordnung von fünf Wirbelkammern hintereinander. Der Übergang der Durchmesser bei den die Verwirbelungselemente 26 aufnehmenden Wirbelkammen vom Kammerdurchmesser auf den Rohrdurchmesser ist kontinuierlich (konische Ausbildung, wie in der Figur 3a).

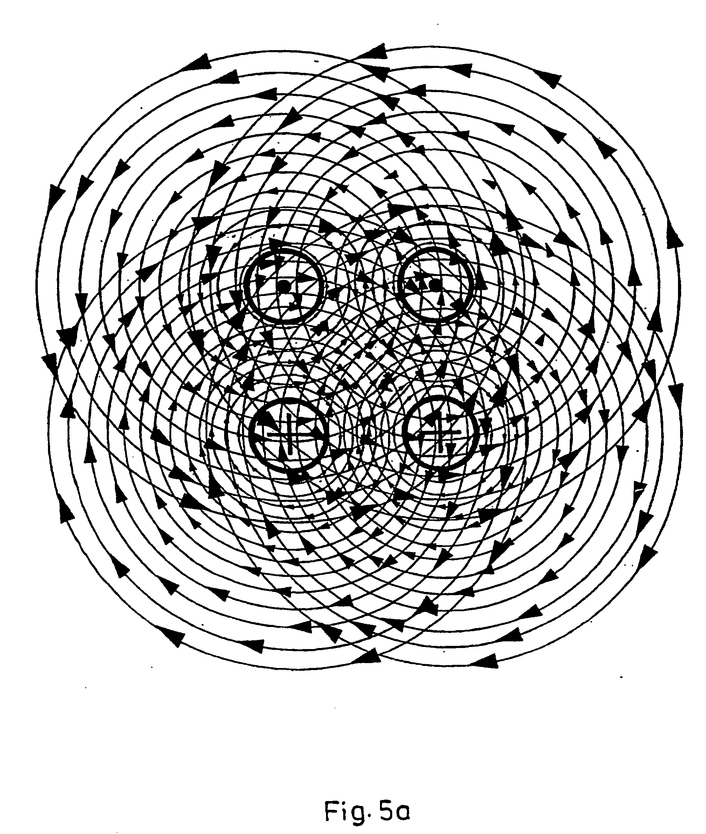

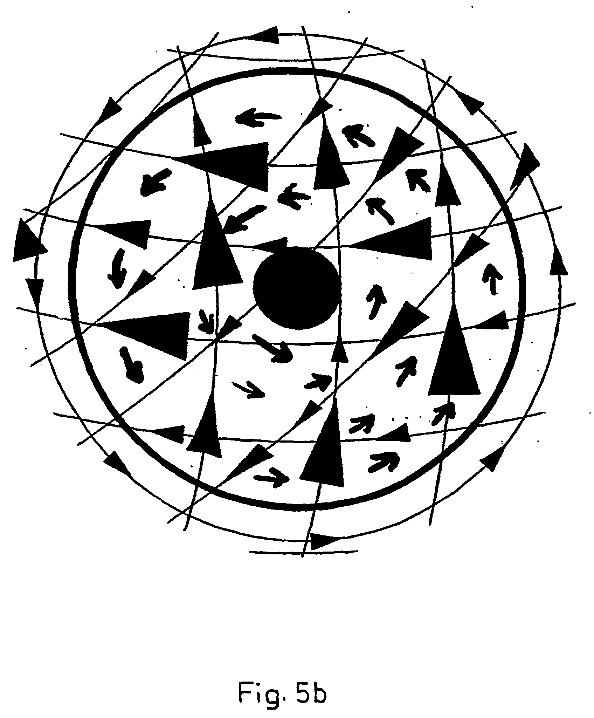

Fig. 5 zeigt einen Detaillquerschnitt durch eine Leitung 4 und deren elektromagnetische Verwirbelung. Genauso wie um einen stromführenden Draht als Folge des Transports freier lonen rings um den elektrischen Leiter ein elektromagnetisches Feld entsteht, bilden sich, während Trinkwasser mit elektrischer Leitfähigkeit die Eingangskupferrohre durchströmt, um diese zwei rechtsdrehende elektromagnetische Felder aus, die von den parallel dazu entstehenden elektrischen Feldern mit entgegengesetzter Drehrichtung durchmischt werden, die aufgrund der gegenläufigen Flußrichtrung in den Ausgangskupferrohren entstehen. Dies ist in der Fig. 5a prinzipiell dargestellt. Fig. 5b zeigt den Detailquerschnitt durch ein Rohr mit den einzelnen Feldern der benachbarten Rohren sowie dem Eigenfeld im Inneren. Auf diese Weise werden die in den Clusterstrukturen, dem Gedächtnis des Wassers, abgespeicherten Informationen infolge Neuordnung der Wasserstruktur gelöscht. Durch die weitere Bearbeitung der Wassermoleküle infolge Verwirbelung und Druckänderungen (Beschleunigung) werden die Wassermoleküle gezwungen, sich innerhalb ihrer Clusterstruktur neu auszurichten.

## Patentansprüche

1. Trinkwasser-Durchströmungsgerät für Wasserleitungen mit einem Gehäuse (19), einem Anschluß (2) für den Wasserzulauf und einem Anschluß (3) für den Wasserablauf an dem Gehäuse und in dem Gehäuse angeordneten Verbindungsleitungen (4, 5; 4', 5') zwischen dem Wasserzulaufanschluß (2) und dem Wasserauslaufanschluß (3) in Form einer Möbiusschleife, wobei
- die Verbindungsleitungen (4, 5; 4', 5') als Kupferrohre ausgebildet sind,
- zwischen dem Wasserzulaufanschluß (2) und dem Wasseraustaufanschluß (3) in beiden Leitungen Verwirbelungseinrichtungen(11) angeordnet sind, die das Wasser in spiralförmige Drehungen versetzen;
- die Leitungen (4, 5; 4', 5') durch zwei Bereiche geführt werden, in denen die Wassermoleküle gezwungen werden, sich innerhalb ihrer Clusterstruktur neu ausrichten zu müssen, indem Magnetfelder mittels eines entsprechend ausgebildeten Magneten (8, 9) erzeugt werden, der zwischen den beiden Leitungen (4, 5; 4', 5') angeordnet ist,
- zwischen den beiden Bereichen in den Leitungen(4, 5; 4', 5') mehrere in Abständen angeordnete druckverändemde Einrichtungen (10) vorgesehen sind;
- zwischen der Kupferrohrkonstruktion (1) einschließlich den Anschlüsse (2, 3) und dem Gehäuse (19) Baumwolle (17) und Kupferfolie (16) angeordnet ist und
- der verbleibende Hohlraum in dem Gehäuse (19) mit Quarzsand (12) ausgefüllt ist, **dadurch gekennzeichnet, daß**
- daß die beiden Magnete (8, 9) in den die Clusterstruktur verändernden Bereichen mit dem magnetischen Nordpol auf die beiden Einlaufrohre (4, 5) und mit dem magnetischen Südpol auf die beiden Auslaufrohre (4', 5') gerichtet sind, so daß das in den Rohren fließende Wasser zuerst zweimal der magnetischen Nordstrahlung und dann zweimal der magnetischen Südstrahlung ausgesetzt ist.
- die Kupferrohrkonstruktion mit zwei Kunststofffolien (13, 15) zwischen denen eine Schicht (14) aus achsgerichtetem Magmamehl angeordnet ist, umhüllt ist;
- zwischen der äußeren Kunststofffolie (15) und dem Gehäuse (19) abwechselnd mehrere Lagen, vorzugsweise vier, achsgerichteter Kupferfolie (16) und Baumwolle (17) angeordnet sind, die mit einer Kupferfolie abschließen und von einer Schicht aus achsgerichteten und piezoelektrisch ausgerichteten Quarzkristallen (18) umgeben sind;
- der innere Raum zwischen den Kupferrohren mit achsgerichteten, Quarzkristallen (12) ausgefüllt ist, und
- das Gehäuse (19) aus einem achsgerichteten Kunststoffrohr besteht.

2. Trinkwasser-Durchströmungsgerät nach Anspruch 1, **dadurch gekennzeichnet, daß** die Kunststofffolie (13, 15) aus Polyäthylen besteht.

3. Trinkwasser-Durchströmungsgerät nach einem der vorangegangenen Ansprüche, **dadurch gekennzeichnet, daß** das Gehäusematerial Polyvinylclorid ist.

4. Trinkwasser-Durchströmungsgerät nach einem der vorangegangenen Ansprüche, **dadurch gekennzeichnet, daß** die Quarzkristalle (12, 18) unterschiedliche Korngrößen aufweisen.

5. Trinkwasser-Durchströmungsgerät nach einem der vorangegangenen Ansprüche, **dadurch gekennzeichnet, daß** die druckverändernden Einrichtungen als Wirbelkammern (11) mit einem sprunghaft sich gegenüber den Leitungsrohre vergrößernden Querschnitt ausgebildet sind, und propellerartig ausgestaltete feststehende Verwirbelungselemente (20) aufweisen, um den Drall des durchströmenden Wassers von Wirbelkammer zu Wirbelkammer oder auch in einerhalb einer Wirbelkammer ruckhaft zu ändern.

6. Trinkwasser-Durchströmungsgerät nach Anspruch 5, **dadurch gekennzeichnet, daß** die Verwirbelungselemente (20) der aufeinanderfolgenden Wirbelkammem (11) verdreht angeordnet sind, um das durchströmende Wasser abwechselnd in verschiedene Richtungen zu drehen.

7. Trinkwasser-Durchströmungsgerät nach Anspruch 6, **dadurch gekennzeichnet, daß** in den Wirbelkammern (11) vier die Form eines Kreissegmentes aufweisende Lamellen (22) angeordnet sind.

8. Trinkwasser-Durchströmungsgerät nach Anspruch 7, **dadurch gekennzeichnet, daß** die Lamellen (22) im Rohrmittelpunkt miteinander verbunden und mit ihren Flächen gegeneinander aus der Kreisfläche herausgedreht, vorzugsweise daß zwei gegenüberliegenden Lamellen gegeneinander um 90° gedreht sind.

9. Trinkwasser-Durchströmungsgerät nach Anspruch 6, **dadurch gekennzeichnet**, im Zentrum der Verwirbelungselemente (11, 23) eine Durchströmungsöffnung (25) angeordnet ist.

## Claims

1. Drinking water flow-through device for water pipes having a housing (19), a connection (2) for the water inlet and a connection (3) for the water outlet on the housing and connecting pipes (4, 5; 4', 5') disposed in the housing between the water inlet connection (2) and the water outlet connection (3) in the form of a Möbius loop, wherein
- the connecting pipes (4, 5;4', 5') are copper pipes,
- turbulence devices (11) are disposed between the water inlet connection (2) and the water outlet connection (3) in both pipes, which turbulence devices (11) displace the water in spiral-shaped rotations;
- the pipes (4, 5; 4', 5') are guided through two regions, in which the water molecules are forced to have to re-align within their cluster structure, by magnetic fields being created by means of a correspondingly configured magnet (8, 9), which is disposed between the two pipes (4, 5; 4', 5'),
- several pressure-changing devices (10) are provided disposed at spacings between the two regions in the pipes (4, 5; 4', 5'),
- cotton wool (17) and copper foils (16) are disposed between the copper pipe structure (1) including the connections (2, 3) and the housing (19) and
- the remaining cavity in the housing (19) is filled with quartz sand (12), **characterised in that**
- the two magnets (8, 9) in the regions altering the cluster structure are directed with the north magnetic pole onto the two inlet pipes (4, 5) and with the south magnetic pole onto the two outlet pipes (4', 5'), such that the water flowing in the pipes is initially exposed twice to north magnetic radiation and then twice to south magnetic radiation,
- the copper pipe structure is surrounded by two plastic material foils (13, 15), between which is disposed a layer (14) of axially oriented magma powder;
- several layers, preferably four, of axially oriented copper foils . (16) and cotton wool (17) are disposed alternately between the outer plastics material foil (15) and the housing (19), said layers are terminated by a copper foil and are surrounded by one layer of axially oriented, piezoelectrically oriented quartz crystals (18);
- the inner space between the copper pipes is filled with axially oriented quartz crystals (12), and
- the housing (19) comprises an axially oriented plastics material pipe.

2. Drinking water flow-through device according to claim 1, **characterised in that** the plastics material foil (13, 15) is made from polyethylene.

3. Drinking water flow-through device according to one of the preceding claims, **characterised in that** the housing material is polyvinyl chloride.

4. Drinking water flow-through device according to one of the previous claims, **characterised in that** the quartz crystals (12, 18) include various grain sizes.

5. Drinking water flow-through device according to one of the previous claims, **characterised in that** the pressure-changing devices are in the form of eddy chambers (11) with a cross-section which increases in a jerky manner relative to the pipes, and include fixed propeller shaped _{'} turbulence elements (20) in order to change, in a jerky manner, the angular momentum of the water flowing through from eddy chamber to eddy chamber or also in one half of one eddy chamber.

6. Drinking water flow-through device according to claim 5, **characterised in that** the turbulence elements of the successive eddy chambers (11) are torsionally disposed in order to turn the water flowing-through alternately into different directions.

7. Drinking water flow-through device according to claim 6, **characterised in that** four blades (22), which are in the form of a circular segment, are disposed in the eddy chambers (11).

8. Drinking water flow-through device according to claim 7, **characterised in that** the blades (22) are interconnected at the central point of the pipe and are turned with their faces towards each other out of the area of the circle, preferably **in that** two oppositely situated blades are turned towards each other by 90°.

9. Drinking water flow-through device according to claim 8, **characterised in that** a flow opening (25) is disposed in the centre of the turbulence elements (11, 23).

## Revendications

1. Appareil traversé par l'eau potable pour conduites d'eau, comprenant un boîtier (19), un raccord (2) pour l'arrivée d'eau et un raccord (3) pour l'écoulement d'eau sur le boîtier et des conduites de jonction (4, 5 ; 4', 5') disposées à l'intérieur du boîtier, entre le raccord pour l'arrivée d'eau (2) et le raccord pour l'écoulement d'eau (3), qui forment un ruban de Möbius, sachant que
- les conduites de jonction (4, 5 ; 4', 5') sont constituées de tuyaux en cuivre ;
- entre le raccord d'arrivée d'eau (2) et le raccord d'écoulement d'eau (3), des dispositifs de tourbillonnement (11) sont disposés dans les deux conduites, qui confèrent à l'eau des mouvements de rotation en forme de spirale ;
- les conduites (4, 5 ; 4', 5') passent dans deux zones dans lesquelles les molécules d'eau sont forcées de se positionner nouvellement à l'intérieur de leur structure en grappe en raison de champs magnétiques produits au moyen d'un aimant (8, 9) réalisé en conséquence qui est placé entre les deux conduites (4, 5 ; 4', 5'),
- entre les deux zones, plusieurs dispositifs modifiant la pression (10) espacés les uns des autres sont prévus dans les conduites (4, 5 ; 4', 5') ;
- entre la structure de tuyaux de cuivre (1) incluant les raccords (2, 3) et le boîtier (19) sont placés du coton (17) et une feuille de cuivre (16), et
- l'espace vide restant à l'intérieur du boîtier (19) est rempli de sable de quartz (12), **caractérisé en ce que**
- dans les zones où la structure en grappe se modifie, les deux aimants (8, 9) ont le pôle nord magnétique dirigé vers les deux tuyaux d'arrivée (4, 5) et le pôle sud magnétique vers les deux tuyaux d'écoulement (4', 5'), si bien que l'eau circulant dans les tuyaux est tout d'abord exposée à deux reprises au rayonnement magnétique nord, puis à deux reprises au rayonnement magnétique sud;
- la structure en tuyaux de cuivre est entourée de deux films en matière synthétique (13, 15) entre lesquels est disposée une couche (14) de poudre magmatique orientée dans l'axe,
- entre le film en matière synthétique extérieur (15) et le boîtier (19) sont disposées en alternance plusieurs couches, de préférence quatre, de feuille de cuivre (16) orientées dans l'axe et de coton (17), qui se terminent par une feuille de cuivre et sont entourées d'une couche composée de cristaux de quartz (18) piézoélectriques orientés dans l'axe ;
- l'espace interne entre les tuyaux de cuivre est rempli de cristaux de quartz (12) orientés dans l'axe, et
- le boîtier (19) est composé d'un tuyau en matière synthétique orienté dans l'axe.

2. Appareil traversé par l'eau potable selon la revendication 1, **caractérisé en ce que** le film en matière plastique (13, 15) est composé de polyéthylène.

3. Appareil traversé par l'eau potable selon l'une des revendications précédentes, **caractérisé en ce que** la matière dont est constitué le boîtier est du chlorure de polyvinyle.

4. Appareil traversé par l'eau potable selon l'une des revendications précédentes, **caractérisé en ce que** les cristaux de quartz (12, 18) présentent différentes grosseurs de grain.

5. Appareil traversé par l'eau potable selon l'une des revendications précédentes, **caractérisé en ce que** les dispositifs modifiant la pression sont réalisés en tant que chambres de turbulences (11) dont la section transversale s'agrandit brutalement par rapport à celle des conduites et présentent des éléments de tourbillonnement (20) fixes conçus à la manière d'hélices, afin de modifier brusquement le mouvement hélicoïdal de l'eau en circulation d'une chambre de turbulences à une autre, ou même à l'intérieur d'une même chambre de turbulences.

6. Appareil traversé par l'eau potable selon la revendication 5, **caractérisé en ce que** les éléments de tourbillonnement (20) des chambres de turbulences (11) successives sont disposés de façon inversée, afin de faire tourner l'eau qui traverse lesdites chambres alternativement dans différentes directions.

7. Appareil traversé par l'eau potable selon la revendication 6, **caractérisé en ce que** quatre lamelles (22) présentant la forme d'un segment de cercle sont disposées dans les chambres de turbulences (11).

8. Appareil traversé par l'eau potable selon la revendication 7, **caractérisé en ce que** les lamelles (22) sont assemblées entre elles au centre du tuyau et leurs surfaces font saillie de la surface circulaire de façon inversée, de préférence **en ce que** deux lamelles opposées sont tournées de 90° l'une par rapport à l'autre.

9. Appareil traversé par l'eau potable selon la revendication 6, **caractérisé en ce qu'**au centre des éléments de tourbillonnement (11, 23) est disposée une ouverture de passage (25).
